# EUROPEAN PATENT SPECIFICATION

(11) **EP 2 659 534 B1**
(45) Date of publication and mention of the grant of the patent: **07.12.2016**
(21) Application number: 11852360.4
(22) Date of filing: 30.12.2011
(51) Int. Cl.: H01M 10/647, H01M 10/6557, H01M 10/613, H01M 2/10, H01M 10/6551, H01M 10/6555

(54) **CASE OF POUCH TYPE CELL**
GEHÄUSE EINER BEUTELARTIGEN ZELLE
BOÎTIER DE CELLULE DE TYPE À POCHE

(30) Priority: 30.12.2010 KR 20100139669
(43) Date of publication of application: 06.11.2013
(73) Proprietor: SK Innovation Co., Ltd., Seoul 110-110 (KR)
(72) Inventor: LEE, Won Jun, Daejeon 305-755 (KR); HAM, Deok Hoon, Daejeon 302-732 (KR); KIM, Seung Bum, Suwon-si Gyeonggi-do 443-746 (KR); LIM, Dong Joo, Anyang-si Gyeonggi-do 431-762 (KR); KIM, Sang Hyuk, Seoul 110-110 (KR)
(74) Representative: Banzer, Hans-Jörg
(86) International application number: PCT/KR2011/010358
(87) International publication number: WO 2012/091509

(56) References cited:
- JP-A- 2006 244 756
- KR-A- 20060 059 699
- KR-A- 20070 109 082
- KR-A- 20100 066 712
- US-A1- 2004 021 442
- US-A1- 2008 193 838
- US-A1- 2010 021 802

## Description

### Technical Field

The present invention relates to a case of pouch type cells, and more particularly, to a case of pouch type cells, which stably protects pouch type cells constituting secondary batteries used as a high output power supply and has excellent heat dissipation performance.

### Background Art

In general, unlike primary batteries, use of secondary batteries that are rechargeable and dischargeable, in cutting-edge technology fields such as digital cameras, cellular phones, laptop computers, and hybrid vehicles are being actively researched. Examples of secondary batteries are nickel-cadmium batteries, nickel-metal hydride batteries, nickel-hydrogen batteries, and lithium secondary batteries. Among these, lithium secondary batteries have an operating voltage of 3.6 V or higher and are used as a power supply of portable electronic devices, or a plurality of lithium secondary batteries are serially connected and used in high output hybrid vehicles. The operating voltage of the lithium secondary batteries is three times greater than that of nickel-cadmium batteries or nickel-metal hydride batteries, and energy density thereof per unit weight is also excellent. Thus, the use of lithium secondary batteries is increasing.

Lithium secondary batteries may be manufactured in various forms. Representative forms are a cylinder type and a prismatic type which are mainly used in lithium ion batteries. Lithium polymer batteries, which are recently being noticed are manufactured in a pouch type having flexibility, and thus the form thereof may be relatively unrestricted.

Since the pouch type lithium polymer batteries (hereinafter referred to as "pouch type cells") are likely to bend or crease, and thus needs to be protected in a rigid case for use over a long time period. However, according to the related art, to serially connect the pouch type cells, electrode tabs of each of pouches are respectively connected to one another via a printed circuit board (PCB) in which a circuit pattern is formed, and then the pouches are accommodated in a case.

However, when forming a high output battery module by stacking the pouch type cells according to the related art, it is difficult to safely protect the pouch type cells which have a fragile structure, and the method of stacking a plurality of pouch type cells and connecting them using a PCB is not stable, either. Thus, the battery module is vulnerable to environmental changes such as external impact.

As a method of stacking pouch type cells constituting a lithium battery used as a high output power supply in rigid and stable manner and serially connecting the cells more reliably, Korean Patent Publication No. 2006-0102207 discloses a "case for high output lithium secondary battery."

Referring to FIG. 1, the case for high output lithium secondary battery disclosed in Korean Patent Publication No. 2006-0102207 includes a pouch type cell 10 including a pouch 11 and an electrode tab 12, a pouch supporting frame 21 supporting the pouch 11, and a rack-type heat dissipation unit 22 that is formed on a surface of the pouch supporting frame 21 and provides space for discharging heat generated in the pouch 11, and a wall-shaped tab supporting portion 23 that is formed at one side of the heat dissipation unit 22 and supports the electrode tab 12 of the pouch type cell 10.

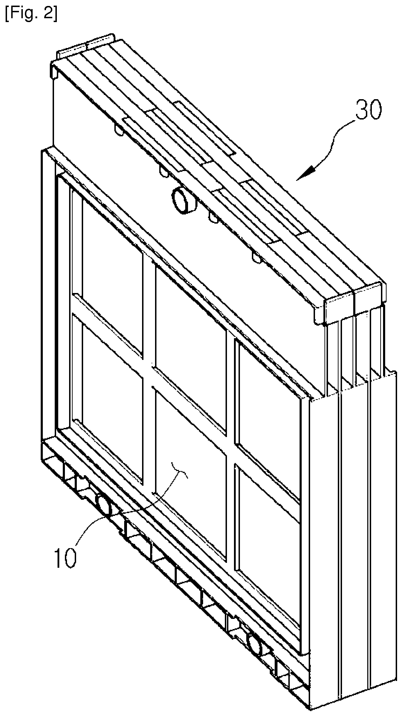

Referring to FIG. 2, a battery module 30 in which the pouch type cells 10 are stacked rigidly and stably may be manufactured by using the case for the high output lithium secondary battery.

However, in the battery module 30 as described above, a cooling passage is not provided between the pouch support frames 21, and thus heat dissipation performance is reduced, and the pouch type cells 10 are not stably fixed in the case.

Further prior art is provided by US2004/0021442.

### Disclosure of Invention

### Technical Problem

An object of the present invention is to provide a case of pouch type cells, which has excellent heat dissipation performance and which is capable of stably protecting the pouch type cells.

### Solution to Problem

In one general aspect, a case of pouch type cells for protecting pouch type cells including a pouch and an electrode tab formed at one side of the pouch, includes: two sheets of aluminum covers that support external surfaces of the pouch of two pouch type cells that are stacked; and a partition that is disposed between the pouch type cells to prevent a short circuit.

The partition includes a frame that is hollow and a tap supporting portion that is formed at one side of the frame and supports the electrode tab.

The partition further includes a buffer pad that is inserted into hollow space of the frame.

The aluminum cover may have a plurality of curved stack portions formed by performing press processing such that an inner portion thereof is recessed and an outer portion thereof is protruded.

The aluminum cover is applied with a curve gradient so as to be recessed in an inward direction in which the pouch type cells are accommodated.

### Advantageous Effects of Invention

The case of pouch type cells according to the present invention is formed of aluminum and thus has excellent performance in protecting cells and in dissipating heat.

In addition, as a curved stack portion is formed on a heat dissipation surface, cooling performance may be improved and a cooling passage may be provided between aluminum covers when a plurality of cases for pouch type cells are stacked.

In addition, by applying a curve gradient to the aluminum covers, the cells may be stably fixed inside the case, and appropriate surface pressure may be applied to the cells to thereby extend the lifespan of the cells.

### Brief Description of Drawings

The above and other objects, features and advantages of the present invention will become apparent from the following description of preferred embodiments given in conjunction with the accompanying drawings, in which:

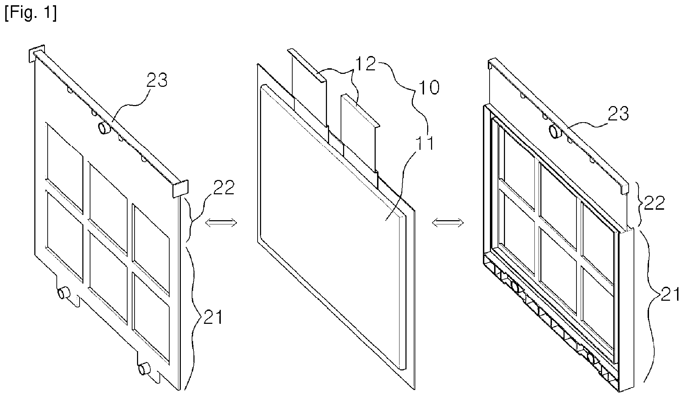

FIG. 1 is an exploded perspective view of a secondary battery according to the related art, for which a case for high output lithium secondary batteries is used;
FIG. 2 is a perspective view of a battery module according to the related art, for which a case for high output lithium secondary batteries is used;
FIG. 3 is a perspective view of a sub-module according to the present invention;
FIG. 4 is an exploded perspective view of a sub-module according to the present invention;
FIG. 5 is a perspective view of a battery module according to the present invention;
FIG. 6 is an exploded perspective view of a sub-module including a partition, in which a buffer pad is inserted into hollow space of a frame, according to the present invention;
FIG. 7 is a side view of a battery module according to the present invention;
FIG. 8 is a perspective view of an aluminum cover, to which a curve gradient is applied, according to the present invention; and
FIG. 9 is a cross-sectional view of an aluminum cover, to which a curve gradient is applied, cut along a direction A-A', according to the present invention.

### [Detailed Description of Main Elements]

1000 : battery module
100 : sub module
110 : pouch type cell 111 : pouch
112 : electrode tab
120 : aluminum cover 121 : connection portion
122 : stack portion
130 : partition 131 : frame
132 : tab supporting portion 133 : buffer pad

### Best Mode for Carrying out the Invention

Hereinafter, the embodiments of the present invention will be described in detail with reference to the accompanying drawings.

However, the attached drawings are examples illustrated for detailed description of the present invention only, and the technical scope of the present invention is not limited by the forms illustrated in the drawings.

The object of the present invention is to provide a case of pouch type cells, which is capable of stably protecting pouch type cells 110 that constitute secondary batteries used as a high output power supply, and which has excellent heat dissipation performance.

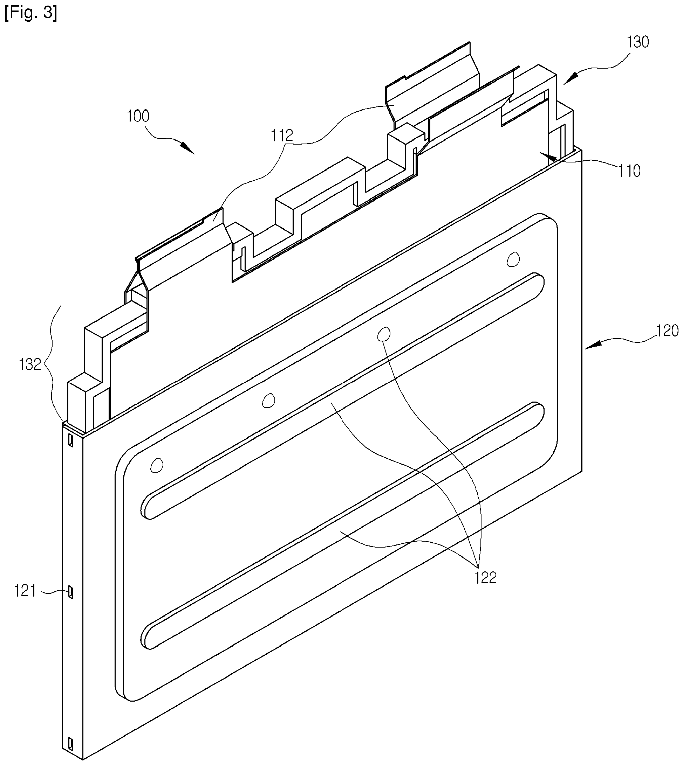

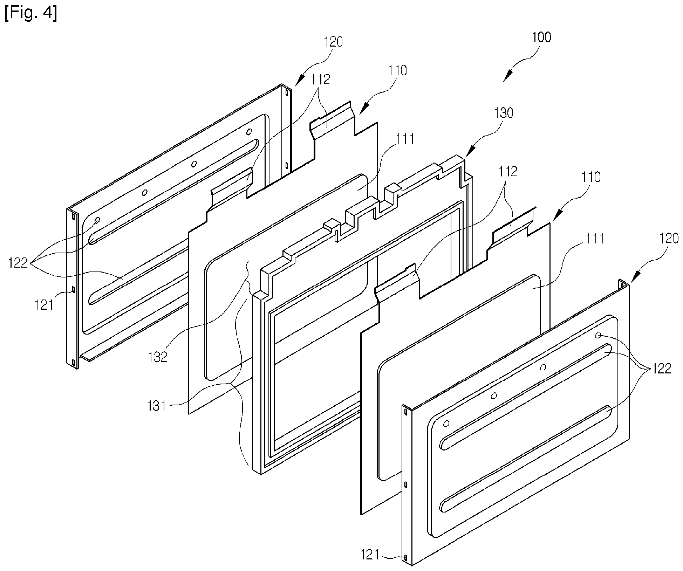

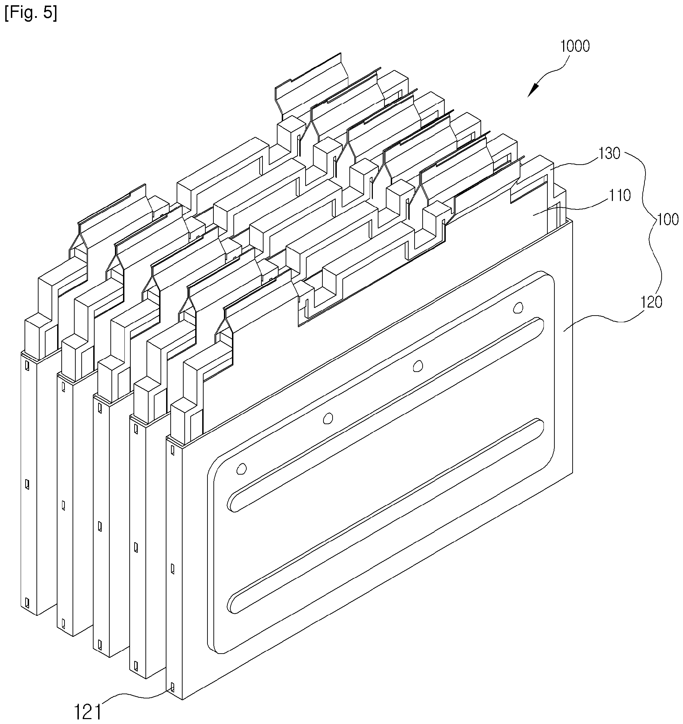

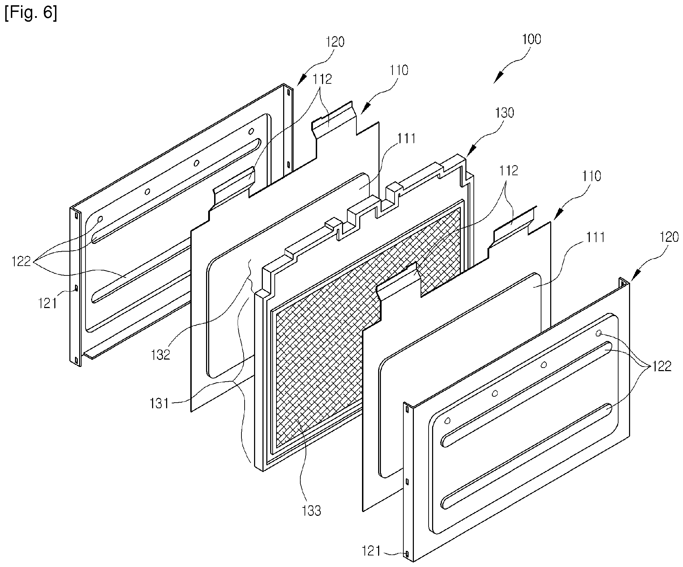

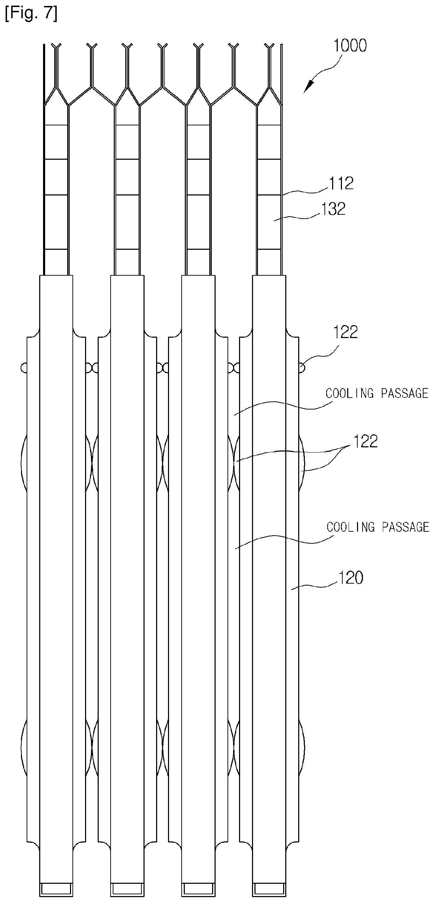

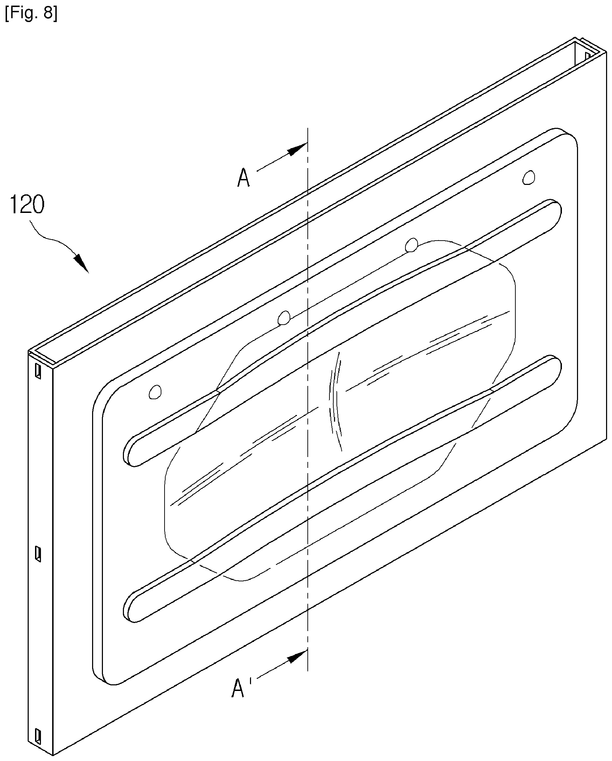

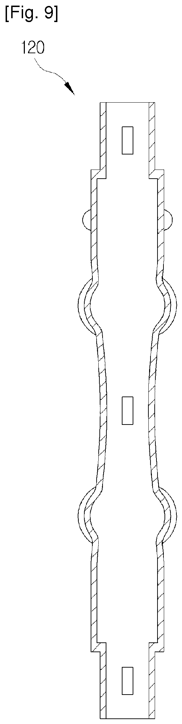

FIG. 3 is a perspective view of a sub-module 100 according to the present invention. FIG. 4 is an exploded perspective view of the sub-module 100 according to the present invention. FIG. 5 is a perspective view of a battery module 1000 according to the present invention. FIG. 6 is an exploded perspective view of a sub-module 100 including a partition 130, in which a buffer pad 133 is inserted into hollow space of a frame 131, according to the present invention. FIG. 7 is a side view of a battery module 1000 according to the present invention. FIG. 8 is a perspective view of an aluminum cover 120, to which a curve gradient is applied, according to the present invention. FIG. 9 is a cross-sectional view of an aluminum cover 120, to which a curve gradient is applied, cut along a direction A-A', according to the present invention.

Referring to FIGS. 3 and 4, the case of pouch type cells protects the pouch type cells 110 which constitute a secondary battery. The pouch type cells 110 includes a pouch 111 and electrode tabs 112 that are formed at one side of the pouch 111. The electrode tabs 112 include an electrode tab 112 of a positive electrode that discharges a current and an electrode tab 112 of a negative electrode that receives a current; the two electrode tabs 112 are separated from each other. Two of the pouch type cells 110 are accommodated inside the case of pouch type cells. The two pouch type cells 110 are stacked in the case of pouch type cells. The case of pouch type cells includes two sheets of aluminum covers 120 that cover external sides of the pouches 111 of the pouch type cells 110. The electrode tabs 112 protrude outward from the aluminum covers 120 so as to be connected to the electrode tabs 112 of other pouch type cells 110 using a welding method in which a laser or ultrasonic wave is used.

Referring to FIG. 5, when a battery module 1000 is manufactured by stacking the pouch type cells 110, a structure that stably protects the pouch type cells 110 is required due to the structural weakness of the pouch type cells 110. The structure needs to have structural stability, good heat dissipation performance of dissipating heat generated by charging or discharging of the pouch type cells 110 constituting a secondary battery, and good performance in protecting the pouch type cells 110 from the external environment, and simplified assembly and productivity thereof needs to be good. In order to effectively satisfy the above conditions, aluminum which is a material having good heat dissipation performance, structural stability and good protection performance is selected to manufacture the aluminum covers 120, while also providing simplified assembly and productivity.

While the case of pouch type cells may be formed as a single-body case by using aluminum, rather than by inserting the pouch type cells 110 into a single-body case, it is easier to handle the pouch type cells 110, which are structurally weak, by providing two sheets of aluminum covers 120 as described above and disposing the pouch type cells 110 on inner portions of the aluminum covers 120 and coupling them.

Referring to FIGS. 3 and 4, a connection portion 121 that is connected and fixed to two ends of the aluminum covers 120 may be formed so as to couple the aluminum covers 120 to each other as described above.

Referring to FIGS. 3 and 4, a partition 130 is provided in the case of pouch type cells in order to separate the pouch type cells 110, which are stacked thereinside, apart from each other. According to the above-described structure, damage to the pouch type cells 110 due to a shorts circuit between the pouch type cells 110 may be prevented.

Referring to FIGS. 4 and 5, the sub-module 100 includes two of the pouch type cells 110, two aluminum covers 120, and the partition 130, and the battery module 1000 is formed by stacking a plurality of the sub-modules 100.

Here, the manufacturing costs of the battery module 1000 with the same capacity may be reduced when two pouch type cells 110 are accommodated using two aluminum covers 120 and the partition 130 compared to when one pouch type cell 110 is accommodated using two aluminum covers 120. Accordingly, the sub-module 100 includes the two pouch type cells 110, the two aluminum covers 120, and the partition 130.

The partition 130 may be formed of plastics. Since plastics is a non-conductor through which no electricity flows, it is appropriate to prevent a short circuit between the pouch type cells 110.

Referring to FIG. 4, the partition 130 may include a frame 131 which is hollow and a tab supporting portion 132 that is formed at one side of the frame 131 and supports the electrode tabs 112. According to the structure described above, the pouch type cells 110 are spaced apart from each other to prevent a short circuit, and collision between the pouch type cells 110 may be reduced, and the electrode tabs 112 protruding from the aluminum covers 120 to the outside may be supported.

Referring to FIG. 6, the partition 130 may further include a buffer pad 133 that is inserted into hollow space in the frame 131 and contacts the pouches 111 of the pouch type cells 110. According to the above-described structure, noise, vibration, and impact of a machine is prevented from transmitting to the pouch type cells 110, and a surface pressure between the pouch type cells 110 and the aluminum covers 120 may be controlled.

Referring to FIGS. 4 and 7, in the case of pouch type cells, a plurality of curved stack portions 122 are formed by performing press processing such that an inner portion of the aluminum covers 120 is recessed and an outer portion thereof is protruded. According to the above-described structure, cooling performance of the aluminum covers 120 which discharge heat generated by charging or discharging of the pouch type cells 110 may be maximized, and moreover, when the battery module 1000 is manufactured by stacking a plurality of sub-modules 100, cooling passages may be provided between the sub-modules 100. By stacking the sub-modules 100 in parallel, external surfaces of the aluminum covers 120 facing each other are symmetrical with each other. When the sub-modules 100 are stacked while the stack portions 122 of the facing aluminum covers 120 contact each other, portions of the aluminum covers 120 where the stack portions 122 are not formed are spaced apart from each other so as to form hollow space, thereby providing passages for a cooling medium that dissipates heat generated by charging or discharging of the pouch type cells 110 constituting a secondary battery. Accordingly, the battery module 1000 having excellent cooling performance may be formed.

A cooling method of the battery module 1000 described above may be an air cooling method, and the cooling medium may be the air.

The stack portions 122 may have various curved forms. Also, when the battery module 1000 is manufactured as described above, in order that the sub-modules 100 may be stacked in parallel, the length of the stack portions 122 protruding outwardly may be uniform, and a plurality of stack portions 122 may be spaced apart from each other in vertical and horizontal directions of the aluminum covers 120, or the stack portions 122 may be extended in a horizontal direction to be spaced apart from each other in a vertical direction.

Referring to FIGS. 3, 8, and 9, a curve gradient may be applied to the aluminum covers 120 so as to be recessed concavely in an inward direction in which the pouch type cells 110 are accommodated. By applying a curve gradient to the aluminum covers 120, an appropriate surface pressure may be provided to the pouch type cells 110, thereby increasing the lifespan of the pouch type cells 110 and stably fixing the pouch type cells 110 on the inner portion of the aluminum covers 120.

Hereinafter, the battery module 1000 formed by using the case of pouch type cells according to an embodiment of the present invention will be described in detail with reference to the attached drawings.

Referring to FIG. 4, the case of pouch type cells includes the two aluminum covers 120 and the partition 130 as described above.

Referring to FIGS. 4, 8, and 9, the two pouch type cells 110 are stacked between the two aluminum covers 120, to which a curve gradient is applied such that the aluminum covers 120 are concavely recessed in an inward direction, and the aluminum covers 120 are coupled to external surfaces of the pouches 111 to form the sub-modules 100, which are stably fixed on inner portions of the aluminum covers 120 with the pouch type cells 110 receiving appropriate surface pressure. Here, the electrode tabs 112 formed at one side of the pouch type cells 110 are coupled so as to protrude outward from the aluminum covers 120. In addition, the partition 130 including the frame 131 that separates the stacked pouch type cells 110 apart from each other and the tab supporting portions 132 that support the electrode tabs 112 is disposed between the pouch type cells 110, thereby preventing a short circuit between the pouch type cells 110.

Referring to FIG. 6, the buffer pad 133 may be inserted into hollow space of the frame 131 in the partition 130 described above.

Referring to FIGS. 5 and 7, the battery module 1000 is formed by stacking a plurality of the sub-modules 100 described above. The sub-modules 100 are stacked in parallel such that the stack portions 122 of the facing aluminum covers 120 contact each other. Here, as external surfaces of the facing aluminum covers 120, on which the stack portions 122 are not formed, are spaced apart from each other to provide passages of a cooling medium that dissipates heat generated in the battery module 1000. In addition, the electrode tabs 112 that are supported by the tab supporting portions 132 of the partition 130 and protrude from the aluminum covers 120 to the outside are connected to electrode tabs 112 of other pouch type cells 110 serially or in parallel, by using a welding method in which a laser or an ultrasonic wave is used.

As described above, by using the case of pouch type cells according to the present invention, the pouch type cells 110 may be stacked rigidly and stably, and the battery module 1000 having excellent heat dissipation performance may be manufactured.

The present invention is not limited to the embodiments described above, and application ranges of the present invention are various. Moreover, the present invention may be modified in various manners without departing from the present invention as defined by the claims.

## Claims

1. A case for protecting two pouch type cells (110) each including a pouch (111) and an electrode tab (112) formed at one side of the pouch (111), the case comprising:
two sheets of aluminum covers (120) that support external surfaces of the two pouch type cells (110) that are stacked, and
a partition (130) that is disposed between the two pouch type cells (110) to prevent a short circuit and to separate the pouch type cells (110) from each other, wherein the partition (130) includes a frame (131) that is hollow, **characterized in that**
the partition (130) includes a tap supporting portion (132) that is formed at one side of the frame and supports the electrode tab (112) and a buffer pad (133) that is inserted into a hollow space of the frame (131),
wherein the two sheets of aluminum covers are arranged on the sides opposite to the buffer-facing surfaces of the pouch type cells and connected to each other, and
wherein at least one aluminum cover (120) is applied with a curve gradient so as to be recessed in an inward direction in which the pouch type cells (110) are accommodated.

2. The case of claim 1, wherein the aluminum cover (120) has a plurality of curved stack portions (122) formed by performing press processing such that an inner portion thereof is recessed and an outer portion thereof is protruded.

## Patentansprüche

1. Gehäuse zum Schützen zweier beutelartiger Zellen (110), wobei jede einen Beutel (111) und eine Elektrodenlasche (112), ausgebildet an einer Seite des Beutels (111), aufweist, wobei das Gehäuse aufweist:
zwei Platten einer Aluminiumabdeckung (120), die äußere Flächen der zwei beutelartigen Zellen (110), die gestapelt sind, stützt, und
eine Abtrennung (130), die zwischen den zwei beutelartigen Zellen (110) angeordnet ist, um einen Kurzschluss zu vermeiden, und um die beutelartigen Zellen (110) voneinander zu trennen, wobei die Abtrennung (130) einen Rahmen(131), der hohl ist, aufweist,
**dadurch gekennzeichnet, dass**
die Abtrennung (130) einen Laschen stützenden Teil (132) aufweist, der an einer Seite des Rahmens ausgebildet ist und die Elektrodenlasche (112) und ein Dämpfungspolster (133), das in einen Hohlraum des Rahmens(131) eingesetzt ist, stützt,
wobei die zwei Platten der Aluminiumabdeckung auf den Seiten angeordnet sind, welche den dämpfungszugewandten Flächen der beutelartigen Zellen entgegengesetzt sind, und miteinander verbunden sind, und
wobei an zumindest einer Aluminiumabdeckung (120) ein Krümmungsverlauf angebracht ist, so dass diese in einer nach innen gerichtete Richtung, in welcher die beutelartigen Zellen (110) aufgenommen sind, vertieft ist.

2. Gehäuse nach Anspruch 1, wobei die Aluminiumabdeckung (120) eine Vielzahl an gekrümmten Stapelungsabschnitten (122) aufweist, welche durch Ausführen einer Druckverarbeitung derart ausgebildet sind, dass ein innerer Abschnitt hiervon vertieft ist und ein äußerer Abschnitt hiervon hervorsteht.

## Revendications

1. Boîtier pour protéger deux cellules de type poche (110) comportant chacune une poche (111) et une patte d'électrode (112) formée sur un côté de la poche (111), le boîtier comprenant :
deux feuilles de couvercles d'aluminium (120) qui supportent des surfaces externes des deux cellules de type poche (110) qui sont empilées, et
une séparation (130) qui est disposée entre les deux cellules de type poche (110) pour empêcher un court-circuit et pour séparer les cellules de type poche (100) l'une de l'autre, dans lequel la séparation (130) comporte un cadre (131) qui est creux, **caractérisé en ce que**
la séparation (130) comporte une partie de support de patte (132) qui est formée sur un côté du cadre et supporte la patte d'électrode (112) et un coussin tampon (133) qui est inséré dans un espace creux du cadre (131),
dans lequel les deux feuilles de couvercles d'aluminium sont agencées sur les côtés en regard des surfaces faisant face au tampon des cellules de type poche et reliées l'une à l'autre et
dans lequel au moins un couvercle d'aluminium (120) est appliqué avec un gradient de courbe de sorte à être évidé dans une direction vers l'intérieur, dans laquelle les cellules de type poche (110) sont logées.

2. Boîtier selon la revendication 1, dans lequel le couvercle d'aluminium (120) a une pluralité de parties empilées courbées (122) formées par la réalisation d'un traitement de pressage de sorte qu'une partie intérieure de celui-ci soit renfoncée et une partie extérieure de celui-ci soit en saillie.
